# EUROPÄISCHE PATENTSCHRIFT

(11) **EP 2 019 918 B1**
(45) Veröffentlichungstag und Bekanntmachung des Hinweises auf die Patenterteilung: **21.02.2018**
(21) Anmeldenummer: 07728176.4
(22) Anmeldetag: 17.04.2007
(51) Int. Cl.: F02D 43/00, F02D 19/06

(54) **VORRICHTUNG UND VERFAHREN ZUR ANSTEUERUNG EINER BRENNKRAFTMASCHINE**
DEVICE AND PROCESS FOR CONTROLLING AN INTERNAL COMBUSTION ENGINE
DISPOSITIF ET PROCÉDÉ DE COMMANDE D'UN MOTEUR À COMBUSTION INTERNE

(30) Priorität: 16.05.2006 DE 102006022801
(43) Veröffentlichungstag der Anmeldung: 04.02.2009
(73) Patentinhaber: Robert Bosch GmbH, 70442 Stuttgart (DE)
(72) Erfinder: ALLGEIER, Thorsten, 74199 Untergruppenbach (DE); LANGER, Winfried, 75428 Illingen (DE); FOERSTER, Juergen, 74379 Ingersheim (DE); THURSO, Jens, 71672 Marbach (DE)
(86) Internationale Anmeldenummer: PCT/EP2007/053711
(87) Internationale Veröffentlichungsnummer: WO 2007/131855

(56) Entgegenhaltungen:
- EP-A2- 1 209 336
- WO-A-99/46496
- US-A- 5 868 121

## Beschreibung

### Stand der Technik

Die Erfindung geht aus von einer Vorrichtung und Verfahren zur Ansteuerung einer Brennkraftmaschine nach der Gattung der unabhängigen Patentansprüche. Aus der deutschen Patentanmeldung DE 10 2004 060905 und der US 5,868,121 ist bereits eine Vorrichtung zur Ansteuerung einer Brennkraftmaschine bekannt, wobei die Brennkraftmaschine wahlweise mit einem flüssigen und einem gasförmigen Betriebsstoff betrieben werden kann. Für den gasförmigen Betriebsstoff sind ein Hochdrucktank, ein Druckminderer und ein Niederdruckeinspritzventil vorgesehen.

### Offenbarung der Erfindung

### Vorteile der Erfindung

Die erfindungsgemäße Vorrichtung bzw. das erfindungsgemäße Verfahren mit den Merkmalen der unabhängigen Patentansprüche haben demgegenüber den Vorteil, dass eine übermäßige Druckerhöhung vor dem Niederdruckeinspritzventil während eines Betriebs mit dem flüssigen Betriebsstoff vermieden wird. Durch diese Maßnahme wird die Betriebssicherheit, insbesondere die zuverlässige Umschaltung vom Betrieb mit dem flüssigen Betriebsstoff auf den Betrieb mit dem gasförmigen Betriebsstoff, verbessert. Es kann so zu jedem Zeitpunkt eine Umschaltung gewährleistet werden.

Weitere Vorteile und Verbesserungen ergeben sich durch die Maßnahmen der abhängigen Patentansprüche. Besonders einfach erfolgt die Erkennung der Druckerhöhung vor dem Niederdruckeinspritzventil über den Vergleichswert hinaus durch Auswertung des Signals eines Drucksensors, der zwischen dem Druckminderer und dem Niederdruckeinspritzventil angeordnet ist. Alternativ dazu kann der Druck vor dem Niederdruckeinspritzventil auch durch eine Berechnung, basierend auf einer Temperaturerhöhung der Brennkraftmaschine, erfolgen. Dann kann auf einen entsprechenden Drucksensor vor dem Niederdruckeinspritzventil verzichtet werden. Besonders einfach erfolgt die Druckreduzierung, indem kurzzeitig ein Betrieb mit dem gasförmigen Betriebsstoff veranlasst wird. Eine besonders gut kontrollierbare Druckreduzierung lässt sich dadurch erreichen, dass ein gleichzeitiger Betrieb mit beiden Betriebsstoffen veranlasst wird, so dass nur kleine Gasmengen eingespritzt werden und ein entsprechender Druckabbau von einem Nutzer der Brennkraftmaschine nicht bemerkt wird. Insbesondere bei Systemen mit einstellbarem Niederdruck kann der Druck auf einen reduzierten Bedarf, insbesondere für den Start mit niedriger Batteriespannung, nachgestellt werden. Es kann so jeweils angepasst auf den konkreten Betriebszustand, in dem die Brennkraftmaschine betrieben wird, eine optimierte Ansteuerung erfolgen.

### Zeichnungen

Ausführungsbeispiele der Erfindung sind in den Zeichnungen dargestellt und in der nachfolgenden Beschreibung näher erläutert. Es zeigen
- Figur 1: eine Brennkraftmaschine mit einer Vorrichtung zur Ansteuerung der Brennkraftmaschine und
- Figur 2: eine Brennkraftmaschine und eine Vorrichtung zur Ansteuerung einer Brennkraftmaschine.

### Beschreibung

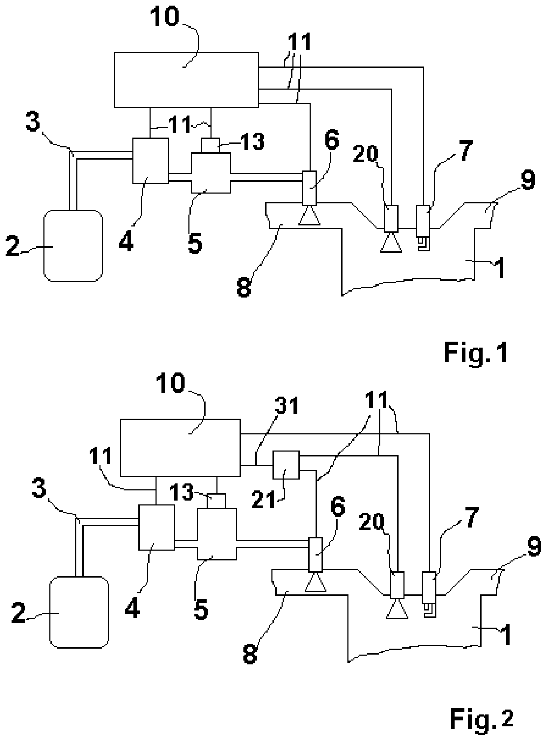

In der Figur 1 wird der Brennraum 1 einer herkömmlichen Ottobrennkraftmaschine gezeigt. Diese Brennkraftmaschine kann sowohl mit einem gasförmigen wie auch einem flüssigen Betriebsstoff betrieben werden. Zur Zuführung des gasförmigen Betriebsstoffes ist ein Hochdrucktank 2 vorgesehen, in dem der gasförmige Betriebsstoff, beispielsweise Erdgas, mit einem Druck bis zu ca. 20 MPa gespeichert ist. Durch eine Hochdruckleitung 3 wird der gasförmige Betriebsstoff zu einem Druckminderer 4 geleitet. In dem Druckminderer 4 wird der hohe Druck des gasförmigen Kraftstoffs von ca. 20 MPa auf einen Niederdruck in der Größenordnung von 0,5 bis 0,8 MPa verringert. Wahlweise kann die Höhe des Niederdrucks durch ein Signal einer Motorsteuerung 10 vorgegeben werden. Es sind aber auch Druckminderer 4 möglich die nur einen fest vorgegebenen Niederdruck realisieren. In diesem Fall ist auch keine Verbindungsleitung 11 zwischen der Motorsteuerung 10 und dem Druckminderer 4 erforderlich. Der gasförmige Betriebsstoff, der nun auf diesen zweiten niedrigeren Druck gebracht ist, wird in einem dem Druckminderer 4 nachgeordneten Speichervolumen 5 gespeichert. Das Speichervolumen 5 kann auch einfach in einer Niederdruckleitung zwischen dem Druckminderer 4 und einem Niederdruckeinspritzventil 6 bestehen. An das Speichervolumen 5 sind ein oder mehrere Einspritzventile 6 angeschlossen. Hier wird exemplarisch nur ein einzelnes Einspritzventil 6 gezeigt. Bei der überwiegenden Anzahl von Brennkraftmaschinen sind aber mehrere Einspritzventile, insbesondere 4 Einspritzventile, vorgesehen, um eine entsprechende Anzahl von Brennräumen mit dem gasförmigen Betriebsstoff zu versorgen.

Der Brennraum 1 ist hier nur sehr schematisch dargestellt. In den Brennraum 1 hinein ragt eine Zündkerze 7, die zur Entzündung des in den Brennraum 1 eingebrachten Luftbetriebsstoffgemisches dient. Die Zuführung dieses Betriebsstoffluftgemisches erfolgt, indem durch das Einspritzventil 6 in das Ansaugrohr 8 gasförmiger Betriebsstoff eingespritzt wird. Durch das Ansaugrohr 8 fließt eine Luftströmung, die in den Brennraum 1 mündet. Durch entsprechende Ein- und Auslassventile, die hier aus Übersichtlichkeitsgründen nicht dargestellt sind, wird das Einbringen des Betriebsstoffluftgemisches in den Brennraum 1 gesteuert. Durch einen Zündfunken an der Kerze 7 wird dann das Betriebsstoffluftgemisch im Brennraum 1 verbrannt und durch einen hier nicht dargestellten Kolben in eine Bewegung umgesetzt. Nach der Verbrennung wird das Verbrennungsprodukt durch ein Abgasrohr 9 aus dem Brennraum 1 abtransportiert. Es handelt sich hierbei um eine normale Ottobrennkraftmaschine, wie sie insbesondere für Benzin und Diesel, aber eben auch für einen Gasbetrieb dem Fachmann allgemein bekannt ist.

Weiterhin ist noch ein Einspritzventil 20 vorgesehen, welches direkt in den Brennraum 1 mündet. Dieses Einspritzventil 20 ist zur Einspritzung eines flüssigen Betriebsstoffes, insbesondere Benzin oder Diesel, vorgesehen. Eine Einspritzung von flüssigem Betriebsstoff ist natürlich ebenfalls in das Saugrohr 8 möglich. Der entsprechende Tank, Zuleitungen und Pumpen für den flüssigen Betriebsstoff sind hier aus Gründen der Übersichtlichkeiten und da sie für das Verständnis der Erfindung nicht von Bedeutung sind, nicht dargestellt. Weiterhin wird in der Figur 1 eine Vorrichtung zur Ansteuerung der Brennkraftmaschine, das heißt ein Steuergerät 10 gezeigt, welches durch eine Vielzahl von Verbindungsleitungen 11 mit verschiedenen Komponenten der Brennkraftmaschine verbunden ist. Durch entsprechende Steuerbefehle auf den Verbindungsleitungen 11 wird beispielsweise das Einspritzventil 6 und das Einspritzventil 20 angesteuert, um eine definierte Menge an gasförmigen Betriebsstoff in das Saugrohr 8 oder eine entsprechende Menge flüssigen Betriebsstoff in den Brennraum 1 einzuspritzen. Eine Einspritzung von flüssigem Betriebsstoff ist natürlich ebenfalls in das Saugrohr 8 möglich. Die Zündkerze 7 wird hier unmittelbar von dem Steuergerät 10 angesteuert, was nur symbolisch zu verstehen ist. Die meisten realen Systeme weisen für die Erzeugung einer Hochspannung eine extern vom Steuergerät 10 angeordnete Zündspule auf, die vom Steuergerät angesteuert wird und die dann ein entsprechendes Hochspannungssignal für die Zündkerze 7 erzeugt. Weiterhin wird auch eine Ansteuerleitung 11 gezeigt, mit der das Steuergerät 10 den Druckminderer 4 ansteuert. Dies ist dann von Bedeutung, wenn durch den Druckminderer 4 unterschiedliche Ausgangsdrücke realisiert werden können. Durch die Ansteuerleitung 11 wird dann von dem Steuergerät 10 ein entsprechender Ausgangsdruck des Druckminderers 4 eingestellt. Für den Betrieb von Brennkraftmaschinen sind jedoch auch Druckminderer 4 gebräuchlich, die auf einen festen Ausgangsdruck eingestellt sind und die dann auch keine Verbindungsleitung 11 zwischen dem Steuergerät 10 und dem Druckminderer 4 benötigen.

Weiterhin ist noch ein Drucksensor 13 vorgesehen, der den Druck im Speichervolumen 5 misst. Dieser Drucksensor 13 ist ebenfalls durch eine Verbindungsleitung 11 mit dem Steuergerät 10 verbunden. Das Steuergerät 10 hat somit eine Information über den Druck im Speichervolumen 5.

Durch den Druckminderer 4 wird der Druck in dem Speichervolumen 5 während des laufenden Betriebs der Brennkraftmaschine mit dem gasförmigen Betriebsstoff auf einen Druck von 0,5 bis 0,8 MPa eingestellt. Auf diesem Bereich des Drucks im Speichervolumen 5 ist auch das Niederdruckeinspritzventil 6 ausgelegt. Das Niederdruckeinspritzventil 6 ist so ausgelegt, dass es im nicht angesteuerten Zustand dicht ist und damit im Stillstand der Brennkraftmaschine kein Gas durch das Niederdruckeinspritzventil 6 in das Saugrohr 8 entweichen kann. Der Druckminderer 4 ist nicht so ausgebildet, dass ein Rückfließen aus dem Speichervolumen 5 in die Hochdruckleitung 3 erfolgen kann, das heißt ein einmal in dem Speichervolumen 5 aufgebauter Druck kann nur durch Öffnen des Niederdruckeinspritzventils 6 abgebaut werden. Während des laufenden Betriebs der Brennkraftmaschine mit dem gasförmigen Betriebsstoff wird durch den Druckminderer 4 gerade die Menge an Gas von der Hochdruckleitung 3 in das Speichervolumen 5 abgegeben, um den gewünschten Druck zwischen 0,5 bis 0,8 MPa aufrecht zu erhalten.

Problematisch sind jedoch die Druckverhältnisse in dem Speichervolumen 5, wenn die Brennkraftmaschine nicht mit dem gasförmigen Betriebsstoff, sondern mit dem flüssigen Betriebsstoff betrieben wird. Bei diesem Betriebszustand ist das Niederdruckeinspritzventil 6 geschlossen, so dass ein in dem Speichervolumen 5 eingeschlossener Druck nicht durch Einspritzungen des Niederdruckeinspritzventils 6 verringert wird. Das Niederdruckeinspritzventil 6 ist ausgelegt, um einen Niederdruck in der Größenordnung von 0,5 bis 0,8 MPa einzuspritzen. Wenn der Druck in dem Speichervolumen 5 auf einen deutlich höheren Wert ansteigt, so wird nach dem Überschreiten einer bestimmten Schwelle das Einspritzventil 6 mit dem vom Steuergerät 10 zur Verfügung gestellten Ansteuerimpuls nicht mehr zu öffnen sein. Wenn also beim laufenden Betrieb der Brennkraftmaschine in dem Speichervolumen 5 ein zu hoher Druck auftritt, kann das Niederdruckeinspritzventil 6 nicht mehr geöffnet werden und ein Betrieb mit dem gasförmigen Betriebsstoff ist nicht mehr möglich.

Ein derartiger zu hoher Druck im Speichervolumen 5 kann beispielsweise auftreten, wenn die Brennkraftmaschine bei geringen Temperaturen gestartet wird und dann bis zu einem warmen Betriebszustand ausschließlich mit dem flüssigen Betriebsstoff betrieben wird. Durch diesen Betrieb steigt die Motortemperatur und somit auch die Temperatur der in unmittelbarer Umgebung des Motors angeordneten Komponenten, beispielsweise auch des Speichervolumens 5. Wenn im kalten Betriebszustand in dem Speichervolumen beispielsweise ein Druck von 0,8 MPa vorliegt, so steigt der Druck im Speichervolumen 5 bei einer Umgebungstemperatur von 120 ° C auf 1,3 MPa. Da das Niederdruckeinspritzventil 6 jedoch nur bis zu einem maximalen möglichen Druck von 1,0 MPa ausgelegt ist, lässt sich dann bei dem Druck von 1,3 MPa das Niederdruckeinspritzventil 6, mit der in einem Kraftfahrzeug zur Verfügung stehenden üblichen Bordspannung von 12 V, nicht mehr öffnen. Eine weitere Ursache von unzulässig hohen Druckerhöhungen im Speichervolumen 5 kann eine gewisse Leckage des Druckminderers 4 sein, die im normalen Betrieb unproblematisch ist, da sie durch Einspritzungen des Niederdruckeinspritzventils 6 abgebaut wird. Wenn jedoch über einen längeren Zeitraum nur der flüssige Betriebsstoff verwendet wird, so können auch geringe Leckagen des Druckminderers 4 zu einer deutlichen Erhöhung des Drucks im Speichervolumen 5 führen.

Erfindungsgemäß wird nun vorgeschlagen, bei einem Betrieb der Brennkraftmaschine mit flüssigem Betriebsstoff, den Druck im Speichervolumen 5 zu überwachen und durch Einspritzungen des gasförmigen Betriebsstoffes sicherzustellen, dass der Druck im Speichervolumen 5 nicht über einen Vergleichswert oder Grenzwert ansteigt. Am einfachsten erfolgt dies durch regelmäßige Auswertung des Signals des Drucksensors 13. Wenn bei laufendem Betrieb der Brennkraftmaschine mit dem flüssigen Betriebsstoff festgestellt wird, dass der Druck im Speichervolumen 5 zu stark ansteigt, so wird der Druck durch Öffnen des Niederdruckeinspritzventils 6 abgebaut.

Die Druckreduzierung eines unzulässig hohen Druckes im Speichervolumen 5 kann beispielsweise dadurch erfolgen, dass für einen kurzen Zeitraum ein Betrieb mit dem gasförmigen Betriebsstoff erzwungen wird. Dies bedeutet, dass der Betrieb mit dem flüssigen Betriebsstoff unterbrochen wird und für einen kurzen Zeitraum ein Betrieb mit dem gasförmigen Betriebsstoff veranlasst wird.

Eine weitere Möglichkeit zum Abbau des Drucks in dem Speichervolumen 5 besteht darin, einen gleichzeitigen Betrieb mit dem flüssigen und dem gasförmigen Betriebsstoff zuzulassen. Dies kann beispielsweise dadurch erfolgen, dass als überwiegender Betriebsstoff der flüssige Betriebsstoff verwendet wird und nur geringe Mengen vom gasförmigen Betriebsstoff eingespritzt werden. Typisch wäre beispielsweise, dass die Menge an flüssigem Betriebsstoff um 10 oder 20 % verringert wird und der Rest der von der Brennkraftmaschine 1 abzugebenden Leistung durch den gasförmigen Betriebsstoff erfolgt. Da je nach Speichervolumen nur recht geringe Mengen an gasförmigem Betriebsstoff eingespritzt werden müssen, um den Druck im Speichervolumen 5 deutlich zu verringern, wird auch durch diese Betriebsart sehr schnell der Druck im Speichervolumen 5 verringert. Der Vorteil dieses Mischbetriebs ist, dass die vollständige Umschaltung teilweise mit Leistungsschwankungen der Brennkraftmaschine 1 verbunden sind. Bei einem vollständigen Wechsel des Betriebsstoffes von flüssig auf gasförmig und wieder auf flüssig wären für den Nutzer der Brennkraftmaschine, beispielsweise in einem Kraftfahrzeug unter hoher Motorlast, kurze Leistungsunterbrechungen der Brennkraftmaschine vorhanden und durchaus spürbar. Durch den Doppelbetrieb mit beiden Betriebsstoffen, wobei der gasförmige Betriebsstoff nur einen geringen Anteil ausmacht, lassen sich diese Leistungsschwankungen der Brennkraftmaschine weitgehend vermeiden.

Alternativ kann die Ermittlung des Druckes im Speichervolumen 5 auch durch eine einfache Temperaturbetrachtung erfolgen. Dieser Fall ist besonders bei einem Kaltstart der Brennkraftmaschine mit dem flüssigen Betriebsstoff sinnvoll. Dazu wird zu Beginn des Betriebes mit dem flüssigen Betriebsstoff die Temperatur des Speichervolumens 5 ermittelt und es wird die sich durch eine Temperaturerhöhung des Speichervolumens 5 ergebende Druckerhöhung in dem Speichervolumen 5 berechnet. Dazu ist nicht unbedingt ein Temperatursensor erforderlich, der unmittelbar dem Speichervolumen 5 zugeordnet ist, sondern die Erwärmung des Speichervolumens 5 lässt sich auch mit einem Modell aus der Temperatur der Brennkraftmaschine 1 ermitteln. Ausgehend von der Temperatur der Brennkraftmaschine 1, der Geschwindigkeit des Fahrzeuges und der Abkühlung des Gases durch den Joule-Thomson-Effekt kann eine vermutliche Temperatur des Speichervolumens 5 berechnet werden, die dann einer Druckberechnung im Speichervolumen 5 zugrunde liegt. Diese Vorgehensweise erfordert keinen Drucksensor 13, der den Druck im Speichervolumen 5 misst.

Weiterhin kann die Druckreduzierung auf einen betriebspunktabhängigen Solldruck erfolgen damit bei einem eventuell folgenden Abstellen und Neustart des Motors im Gasbetrieb keine Startprobleme entstehen. Insbesondere in Kraftfahrzeugen kann bei bestimmten Betriebszuständen, wie beispielsweise beim Motorstart, die zur Verfügung stehende Spannung reduziert sein, da das Spannungsangebot einer Batterie unter hoher elektrischer Last gegenüber einem Normalbetrieb deutlich verringert sein kann. Von dem Steuergerät 10 wird ein entsprechendes Steuersignal zur Betätigung des Niederdruckeinspritzventils 6 erzeugt. Um ein gutes Schaltverhalten des Einspritzventils 6 zu erreichen, wird dabei üblicherweise die höchste zur Verfügung stehende Spannung in einem Kraftfahrzeug, eben die Batteriespannung, verwendet. Wenn aufgrund einer verringerten Batteriespannung die Öffnungskraft, die von dem Niederdruckeinspritzventil 6 aufgebracht werden kann, verringert ist, so erfordern bereits geringere Grenzwerte des Drucks in dem Speichervolumen 5 eine Reduzierung des Drucks im Speichervolumen 5. Der Vergleichswert, ab welchem eine Druckreduzierung des Drucks im Speichervolumen 5 erforderlich ist, sollte daher in Abhängigkeit vom betriebspunktabhängigen Solldruck gewählt werden. In einem Kraftfahrzeug ist in diesem Zusammenhang insbesondere ein geringeres Spannungsangebot einer Fahrzeugbatterie, wie es typischerweise beim Motorstart auftritt, zu beachten.

In der Figur 2 wird ein weiteres Ausführungsbeispiel der Erfindung dargestellt. Bei diesem Ausführungsbeispiel werden wiederum eine Brennkraftmaschine und ein Steuergerät 10 gezeigt. Mit den Bezugszeichen 1, 2, 3, 4, 5, 6, 7, 8, 9, 10, 11, 13 und 20 sind wieder die gleichen Gegenstände bezeichnet, die auch die gleiche Funktion ausüben, wie in der Figur 1. Im Unterschied zur Figur 1 weist jedoch das Steuergerät 10 nicht jeweils eine Verbindungsleitung zu dem Niederdruckeinspritzventil 6 und dem Einspritzventil 20 auf, sondern nur eine gemeinsame Leitung 31. Ein an der gemeinsamen Leitung 31 erzeugtes Ansteuersignal wird durch ein Relais 21 wahlweise entweder dem Niederdruckeinspritzventil 6 oder dem Einspritzventil 20 für den flüssigen Betriebsstoff zugeführt. Dieser Aufbau hat den Vorteil, dass in dem Steuergerät 10 nur eine Endstufe zum Ansteuern von Einspritzventilen vorhanden sein muss und somit der relativ große Platzbedarf einer Endstufe eingespart wird. Die Ansteuerung des Relais 21 kann durch eine einfache Ansteuerleitung, die nicht von einer Leistungsendstufe angesteuert werden muss, erfolgen (in der Zeichnung nicht dargestellt). Bei einem derartigen Aufbau, bei der für die unterschiedlichen Einspritzventile nur eine gemeinsame Endstufe vorgesehen ist, lässt sich natürlich ein gleichzeitiger Einspritzbetrieb mit beiden Betriebsstoffen nicht ermöglichen. Bei diesem Aufbau kann eine Reduzierung des Druckes im Speichervolumen 5 nur durch eine "harte" Umschaltung, das heißt eine vollständige Umschaltung vom Betrieb mit dem flüssigen Betriebsstoff auf einen Betrieb mit dem gasförmigen Betriebsstoff, erfolgen.

## Patentansprüche

1. Vorrichtung (10) zur Ansteuerung einer Brennkraftmaschine (1), die wahlweise mit einem flüssigen und einem gasförmigen Betriebsstoff betrieben werden kann, wobei für den gasförmigen Betriebsstoff ein Hochdrucktank (2), ein Druckminderer (4) und ein Niederdruckeinspritzventil (6) vorgesehen sind, **dadurch gekennzeichnet, dass** Überwachungsmittel vorgesehen sind, die bei einem Betrieb der Brennkraftmaschine (1) mit dem flüssigen Betriebsstoff regelmäßig einen Druck vor dem Niederdruckeinspritzventil (6) auswerten und eine Druckerhöhung über einen Schwellwert erkennen und dann zur Druckverminderung eine Einspritzung des gasförmigen Betriebsstoffs durch das Niederdruckeinspritzventil (6) veranlassen.

2. Vorrichtung nach Anspruch 1, **dadurch gekennzeichnet, dass** die Überwachungsmittel das Signal eines Drucksensors (13), der zwischen dem Druckminderer (4) und dem Niederdruckeinspritzventil (6) angeordnet ist, auswerten.

3. Vorrichtung nach Anspruch 1, **dadurch gekennzeichnet, dass** die Überwachungsmittel aus einer Temperaturerhöhung des Speichervolumens (5) während des Betriebs mit dem flüssigen Betriebsstoff einen Druck vor dem Niederdruckeinspritzventil (6) errechnen.

4. Vorrichtung nach Anspruch 3, **dadurch gekennzeichnet, dass** die Temperaturerhöhung des Speichervolumens (5) während des Betriebs mit dem flüssigen Betriebsstoff aus einem Modell errechnet wird.

5. Vorrichtung nach einem der vorhergehenden Ansprüche, **dadurch gekennzeichnet, dass** die Überwachungsmittel zur Druckreduzierung eine Umschaltung vom Betrieb mit dem flüssigen Betriebsstoff in den Betrieb mit dem gasförmigen Betriebsstoff veranlassen.

6. Vorrichtung nach einem der Ansprüche 1 bis 3, **dadurch gekennzeichnet, dass** die Überwachungsmittel zur Druckreduzierung einen gleichzeitigen Betrieb mit dem flüssigen und dem gasförmigen Betriebsstoff veranlassen.

7. Vorrichtung nach einem der vorhergehenden Ansprüche, **dadurch gekennzeichnet, dass** die Überwachungsmittel den Schwellwert in Abhängigkeit von einem betriebspunktabhängigen Solldruck des Speichervolumens (10) wählen.

8. Verfahren zur Ansteuerung einer Brennkraftmaschine (1), die wahlweise mit einem flüssigen und einem gasförmigen Betriebsstoff betrieben werden kann, wobei für den gasförmigen Betriebsstoff ein Hochdrucktank (2), ein Druckminderer (4) und ein Niederdruckeinspritzventil (6) vorgesehen sind, **dadurch gekennzeichnet, dass** bei einem Betrieb der Brennkraftmaschine (1) mit dem flüssigen Betriebsstoff regelmäßig ein Druck vor dem Niederdruckeinspritzventil (6) ausgewertet wird und wenn eine Druckerhöhung vor dem Niederdruckeinspritzventil (6) über einen Schwellwert erkannt wird, zur Druckverminderung eine Einspritzung des gasförmigen Betriebsstoffs durch das Niederdruckeinspritzventil (6) erfolgt.

## Claims

1. Device (10) for actuating an internal combustion engine (1) which can optionally be operated with a liquid and a gaseous fuel, a high-pressure tank (2), a pressure reducer (4) and a low-pressure injection valve (6) being provided for the gaseous fuel, **characterized in that** monitoring means are provided which, when the internal combustion engine (1) is operating with the liquid fuel, regularly evaluate a pressure upstream of the low-pressure injection valve (6) and detect an increase in pressure above a threshold value and then bring about an injection of the gaseous fuel through the low-pressure injection valve (6) in order to reduce the pressure.

2. Device according to Claim 1, **characterized in that** the monitoring means evaluate the signal of a pressure sensor (13) which is arranged between the pressure reducer (4) and the low-pressure injection valve (6).

3. Device according to Claim 1, **characterized in that** the monitoring means calculate a pressure upstream of the low-pressure injection valve (6) from an increase in temperature of the storage volume (5) during operation with the liquid fuel.

4. Device according to Claim 3, **characterized in that** the increase in temperature of the storage volume (5) during operation with the liquid fuel is calculated from a model.

5. Device according to one of the preceding claims, **characterized in that** the monitoring means bring about switching over from operation with the liquid fuel into operation with the gaseous fuel in order to reduce the pressure.

6. Device according to one of Claims 1 to 3, **characterized in that** the monitoring means bring about simultaneous operation with the liquid fuel and with the gaseous fuel in order to reduce the pressure.

7. Device according to one of the preceding claims, **characterized in that** the monitoring means select the threshold value as a function of an operating-point-dependent setpoint pressure of the storage volume (10).

8. Method for actuating an internal combustion engine (1) which can be optionally operated with a liquid fuel and a gaseous fuel, a high-pressure tank (2), a pressure reducer (4) and a low-pressure injection valve (6) being provided for the gaseous fuel, **characterized in that**, when the internal combustion engine (1) is operating with the liquid fuel, a pressure is regularly evaluated upstream of the low-pressure inject valve (6) and, when a pressure increase upstream of the low-pressure injection valve (6) above a threshold value is detected, an injection of the gaseous fuel through the low-pressure injection valve (6) occurs in order to reduce the pressure.

## Revendications

1. Dispositif (10) pour commander un moteur à combustion interne (1), lequel peut fonctionner au choix avec un carburant liquide et un carburant gazeux, un réservoir à haute pression (2), un détendeur (4) et un injecteur à basse pression (6) étant présents pour le carburant gazeux, **caractérisé en ce qu'**il existe des moyens de surveillance qui, lors d'un fonctionnement du moteur à combustion interne (1) avec le carburant liquide, interprètent régulièrement une pression avant l'injecteur à basse pression (6) et détectent une augmentation de la pression au-dessus d'une valeur de seuil et provoquent alors une injection du carburant gazeux à travers l'injecteur à basse pression (6) en vue d'une réduction de la pression.

2. Dispositif selon la revendication 1, **caractérisé en ce que** les moyens de surveillance interprètent le signal d'un capteur de pression (13) qui est disposé entre le détendeur (4) et l'injecteur à basse pression (6).

3. Dispositif selon la revendication 1, **caractérisé en ce que** les moyens de surveillance calculent une pression avant l'injecteur à basse pression (6) à partir d'une augmentation de la température du volume de stockage (5) pendant le fonctionnement avec le carburant liquide.

4. Dispositif selon la revendication 3, **caractérisé en ce que** l'augmentation de la température du volume de stockage (5) pendant le fonctionnement avec le carburant liquide est calculée à partir d'un modèle.

5. Dispositif selon l'une des revendications précédentes, **caractérisé en ce que** les moyens de surveillance, en vue d'une réduction de la pression, provoquent une commutation du fonctionnement avec le carburant liquide au fonctionnement avec le carburant gazeux.

6. Dispositif selon l'une des revendications 1 à 3, **caractérisé en ce que** les moyens de surveillance, en vue d'une réduction de la pression, provoquent un fonctionnement simultané avec le carburant liquide et le carburant gazeux.

7. Dispositif selon l'une des revendications précédentes, **caractérisé en ce que** les moyens de surveillance sélectionnent la valeur de seuil en fonction d'une pression de consigne du volume de stockage (10) dépendante du point de fonctionnement.

8. Procédé pour commander un moteur à combustion interne (1), lequel peut fonctionner au choix avec un carburant liquide et un carburant gazeux, un réservoir à haute pression (2), un détendeur (4) et un injecteur à basse pression (6) étant présents pour le carburant gazeux, **caractérisé en ce que** lors d'un fonctionnement du moteur à combustion interne (1) avec le carburant liquide, une pression avant l'injecteur à basse pression (6) est régulièrement interprétée et lorsqu'une augmentation de la pression au-dessus d'une valeur de seuil est détectée avant l'injecteur à basse pression (6), il se produit une injection du carburant gazeux à travers l'injecteur à basse pression (6) en vue d'une réduction de la pression.
